(19) Europäisches Patentamt
European Patent Office
Office européen des brevets

(11) **EP 1 399 807 B1**

(12) **FASCICULE DE BREVET EUROPEEN**

(45) Date de publication et mention
de la délivrance du brevet:
**20.06.2007 Bulletin 2007/25**

(21) Numéro de dépôt: **02735524.7**

(22) Date de dépôt: **29.04.2002**

(51) Int Cl.:
***G06F 7/72*** *(2006.01)*

(86) Numéro de dépôt international:
**PCT/FR2002/001491**

(87) Numéro de publication internationale:
**WO 2002/088934 (07.11.2002 Gazette 2002/45)**

(54) **BROUILLAGE D'UN CALCUL METTANT EN OEUVRE UNE FONCTION MODULAIRE**

**VERSCHLEIERUNG EINER EINE MODULAREN FUNKTION DURCHFÜHRENDEN BERECHNUNG**

**METHOD FOR ENCRYPTING A CALCULATION USING A MODULAR FUNCTION**

(84) Etats contractants désignés:
**DE FR GB IT**

(30) Priorité: **30.04.2001 FR 0105815**

(43) Date de publication de la demande:
**24.03.2004 Bulletin 2004/13**

(73) Titulaire: **STMicroelectronics S.A.**
**92120 Montrouge (FR)**

(72) Inventeurs:
• **LIARDET, Pierre-Yvan**
**F-13790 Peynier (FR)**
• **ROMAIN, Fabrice**
**83560 Rians, FRANCE (FR)**

(74) Mandataire: **de Beaumont, Michel**
**Cabinet Michel de Beaumont**
**1, rue Champollion**
**38000 Grenoble (FR)**

(56) Documents cités:
**EP-A- 1 006 492          WO-A-98/52319**
**WO-A-99/35782**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne la protection d'une clé ou donnée secrète (mot binaire) utilisée dans un processus d'authentification ou d'identification d'un circuit électronique (par exemple, une carte à puce) ou analogue, contre des tentatives de piratage. L'invention concerne plus particulièrement le brouillage des calculs prenant en compte la donnée secrète. Par brouillage, on entend une modification des caractéristiques physiques observables (consommation, rayonnements thermique, électromagnétique, etc.) induites par le fonctionnement d'un composant.

Un exemple d'application de la présente invention concerne un processus de contre-mesure contre une attaque par analyse de la consommation directe (Simple Power Analysis, SPA) ou statistique (Differential Power Analysis, DPA) d'un circuit de traitement numérique exploitant une donnée privée ou secrète. Une telle attaque par analyse de la consommation constitue une attaque susceptible d'être utilisée aujourd'hui par des pirates pour tenter de découvrir une clé numérique ou analogue. Une telle attaque consiste à évaluer la dépendance directe ou statistique entre la consommation du circuit et l'utilisation de données numériques traitées par une puce et faisant intervenir une quantité secrète. En effet, dans un traitement algorithmique au moyen d'un circuit de traitement, il existe une dépendance entre la consommation du circuit et la donnée traitée. Le pirate utilise la ou les données introduites dans le circuit, donc "visibles", et utilisées par l'algorithme, afin de déterminer la donnée secrète enfouie dans le circuit, en examinant sa consommation lors de l'exécution de l'algorithme.

Afin de rendre plus difficile les attaques par analyse différentielle de consommation, on cherche généralement à rendre indépendantes les données visibles des données traitées. Par données visibles, on entend les mots binaires introduits dans le circuit de traitement algorithmique et extraits de ce circuit. Le calcul proprement dit, qui influence le plus la consommation du circuit, s'effectue alors sur une donnée modifiée ou brouillée.

Généralement, on utilise une valeur aléatoire pour convertir la donnée introduite en une donnée brouillée participant au calcul.

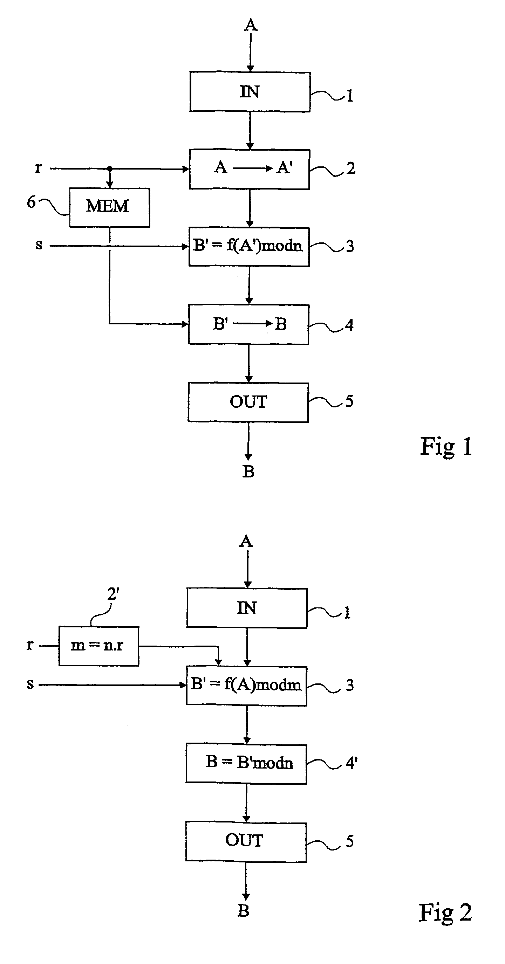

La figure 1 représente, sous forme d'organigramme très schématique, un exemple classique de procédé de traitement d'une donnée A introduite dans une puce d'authentification par un algorithme de calcul réalisant une opération modulaire. L'introduction de la donnée A est symbolisée en figure 1 par un bloc 1 (IN). La donnée A est ensuite convertie en une donnée A' (bloc 2) en utilisant une quantité aléatoire r. Cette conversion consiste, par exemple, à appliquer une opération arithmétique aux opérandes A et r. La donnée A' subit le calcul de la fonction d'authentification (bloc 3). Ce calcul consiste à effectuer une opération B' = f(A') modulo n, où la fonction f représente une opération arithmétique modulaire. La taille (nombre de bits) du modulo n de cette fonction est généralement prédéterminée par le nombre de bits pour lequel est prévu le circuit de traitement. En effet, on dimensionne généralement le nombre de bits sur lesquels sont exécutées les opérations en fonction des moduli utilisés par ces opérations et des tailles maximales des opérandes et résultats.

Dans l'application plus particulière de l'invention à un traitement d'un algorithme mettant en jeu une donnée secrète s, cette donnée est contenue dans la puce (par exemple, enregistrée à demeure) et est fournie à l'algorithme lors de l'opération de calcul (bloc 3). C'est cette donnée secrète que cherche à détecter le pirate par une analyse de la consommation. Sans le brouillage de la donnée A en donnée A', ce piratage éventuel est facilité dans la mesure où le pirate connaît la donnée A introduite ainsi que le modulo n de la fonction modulaire.

Un exemple courant de fonction arithmétique modulaire est l'exponentiation modulaire qui consiste à appliquer la formule suivante :

$$B' = A'^s \text{ modulo } n.$$

Une fois le résultat B' obtenu par la mise en oeuvre de l'algorithme de calcul, ce résultat est converti, de façon inverse, pour restituer une donnée B (bloc 4) qui est fournie (bloc 5, OUT), en sortie du circuit. La quantité aléatoire r doit être mémorisée (bloc 6, MEM) entre les étapes 2 et 4, afin d'être réutilisée lors de la conversion inverse appliquée au résultat de l'algorithme.

Un inconvénient des procédés de brouillage classiques mettant en oeuvre l'opérande de l'algorithme est qu'ils requièrent une puissance de calcul supplémentaire par rapport à la simple exécution de l'algorithme. En particulier, la conversion de B' en B requiert autant de ressources (mémoire, temps de calcul, etc.) que le calcul de la fonction même.

Un autre inconvénient des procédés classiques est que la mémorisation de la quantité aléatoire r fragilise le processus de contre-mesure à une attaque par examen de la consommation du circuit.

En outre, le simple fait de devoir mémoriser cette donnée aléatoire requiert des circuits spécifiques prenant de la place supplémentaire.

Le document EP-A-1 006 492 décrit un procédé de calcul mettant en oeuvre une opération modulaire dans lequel une quantité aléatoire est réutilisée en fin de procédé. Cela nécessite donc la mémorisation de la quantité aléatoire.

Le document WO-A-98 52319 décrit également un procédé de calcul faisant intervenir une quantité aléatoire. Cette quantité intervient dans le modulo de l'opération et doit également être mémorisée.

La présente invention vise à proposer une nouvelle solution pour brouiller un calcul mettant en jeu au moins une opération arithmétique modulaire, qui nécessite moins de ressources de calcul que les solutions classiques, et qui évite la mémorisation, pendant toute la durée du calcul, d'une quantité aléatoire intervenant dans le brouillage.

Pour atteindre ces objets et d'autres, la présente invention prévoit un procède de brouillage, tel que défini dans la revendication indépendante 1.

Selon un mode de réalisation de la présente invention, ladite opération met en oeuvre au moins une donnée d'entrée.

Selon un mode de réalisation de la présente invention, ladite donnée secrète est contenue dans un circuit électronique mettant en oeuvre le procédé.

Selon un mode de réalisation de la présente invention, ladite donnée d'entrée est une donnée introduite dans un circuit électronique mettant en oeuvre le procédé.

L'invention prévoit également un circuit de traitement mettant en oeuvre ce procédé.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :

la figure 1 illustre sous forme d'organigramme simplifié, la mise en oeuvre d'un procédé de calcul mettant en oeuvre une donnée externe brouillée selon l'état de la technique ; et
la figure 2 illustre, par un organigramme très schématique, un mode de mise en oeuvre du procédé de brouillage selon la présente invention.

Les mêmes éléments sont désignés par les mêmes références aux différentes figures. Pour des raisons de clarté, seules les étapes du procédé de brouillage et de calcul qui sont nécessaires à la compréhension de l'invention ont été illustrées aux figures et seront décrites par la suite. En particulier, les traitements affectant les données n'ont pas été détaillés et ne font pas l'objet de la présente invention. Celle-ci s'applique quels que soient les traitements aval et amont effectués.

La figure 2 illustre, par un organigramme simplifié à rapprocher de celui de la figure 1, un mode de mise en oeuvre du procédé selon l'invention.

Une caractéristique de la présente invention est de brouiller, non plus l'opérande A introduit de l'extérieur (bloc 1, IN), mais le modulo de l'opération arithmétique modulaire réalisée.

Ainsi, selon la présente invention, pour une fonction modulaire de modulo n, on tire à chaque calcul, un nombre entier aléatoire r et l'on multiplie ce nombre aléatoire (bloc 2') au modulo n. On obtient alors un nombre m qui, selon l'invention, est utilisé comme modulo du calcul d'authentification (bloc 3). Ce calcul met donc en oeuvre directement l'opérande A et le modulo modifié m. L'opération mise en oeuvre n'est pas modifiée par rapport au cas classique. Toutefois, on voit bien qu'en affectant le modulo de l'algorithme d'authentification, on affecte les valeurs respectives, donc la consommation du circuit. L'objectif de brouiller le calcul est donc atteint.

Le résultat B' = f (A) modulo m doit, comme c'était le cas précédemment (bloc 4, figure 1), être converti de façon inverse.

Toutefois, selon l'invention, cette conversion inverse (bloc 4', figure 2) est particulièrement simple. En effet, comme le modulo m employé dans l'opération modulaire est un multiple de n (m = r . n), il suffit de réduire le nombre B' modulo n pour obtenir le résultat B à fournir (bloc 5, OUT) en sortie du circuit.

Un avantage de la présente invention est qu'une telle réduction modulaire n'engendre que peu de calculs de même que l'opération multiplicative du modulo.

Un autre avantage de l'invention est qu'il n'est plus nécessaire de mémoriser la quantité aléatoire r pour la conversion inverse. On peut alors effacer cette quantité aléatoire r dès que le nombre m a été calculé (bloc 2'). On rend encore plus difficile le piratage éventuel de la donnée secrète s intervenant dans le calcul.

Le brouillage ou masquage effectué selon l'invention est particulièrement simple à réaliser. On doit simplement tenir compte du nombre de bits pris en compte dans les opérations avec le modulo de plus grande taille, pour dimensionner les circuits de traitement des nombres.

Par exemple, pour un circuit de traitement effectuant classiquement une opération modulaire sur 1024 bits, on peut prévoir d'ajouter 64 bits au nombre traité. Les 64 bits représentent la taille de la quantité aléatoire r mise en oeuvre.

Dans une application particulière de l'invention à une exponentiation modulaire, celle-ci présente un avantage particulier en simplifiant considérablement les calculs par rapport au traitement classique de l'opérande. En effet, une exponentiation modulaire est généralement mise en oeuvre par une technique parfaitement connue de carré-multiplication qui consiste à opérer autant de carrés modulaires que le nombre de bits de l'exposant et autant de produits que le nombre de bits à l'état 1 que comporte l'exposant.

Bien entendu, la présente invention est susceptible de diverses variantes et modifications qui apparaîtront à l'homme de l'art. En particulier, on pourra choisir des dimensions quelconques pour les nombres n et r. On effectuera généralement un compromis entre la taille du modulo et la taille de la quantité aléatoire. En pratique, la taille du modulo est souvent fixée par des impératifs externes (normes, etc.). On accroît alors légèrement (selon la taille choisie pour la quantité aléatoire) le nombre de bits traités par le circuit.

De plus, le procédé de l'invention pourra être combiné au procédé classique pour des applications où l'on est prêt à sacrifier du temps de calcul pour accroître le brouillage.

En outre, on notera que l'invention s'applique plus généralement à n'importe quelle fonction modulaire (par exemple, addition, soustraction, multiplication, inversion modulaire, etc.) et quels que soient les nombres de fonctions calculées et de données d'entrée/sortie, sa mise en oeuvre étant à la portée de l'homme du métier à partir des indications fonctionnelles données ci-dessus. On pourra se référer, par exemple, à l'ouvrage "Handbook of Applied Cryptography" de A.J. Menezes, P.C. van Oorschot et S.A. Vanstone, paru en 1997 aux éditions CRC Press LLC (pages 297, 454 à 459 et 484) pour des exemples d'algorithmes dits d'ELGAMAL et dérivés, mettant en oeuvre des opérations modulaires, auxquels s'applique l'invention.

Enfin, la réalisation d'un circuit de traitement mettant en oeuvre le procédé de calcul et de brouillage de l'invention est à la portée de l'homme du métier à partir des indications fonctionnelles données ci-dessus. La mise en oeuvre de l'invention ne requiert que des moyens classiques, qu'il s'agisse d'une mise en oeuvre logicielle par un microcontrôleur ou d'une mise en oeuvre matérielle par une machine d'états en logique câblée. L'invention qui a été décrite ci-dessus en faisant référence à des exemples de tailles de nombres indiquées sous forme de bits pourra, bien entendu, être transposée à d'autres bases, pourvu que les moyens de calcul utilisés acceptent de telles bases.

## Revendications

1. Procédé de brouillage dans un circuit électronique au moyen d'une quantité aléatoire, (r), d'un calcul mettant en oeuvre au moins une opération arithmétique modulaire faisant intervenir au moins une donnée secrète (s) (3), dans lequel :

    un premier modulo (n) est multiplié par ladite quantité aléatoire (r) ;
    le résultat (m) de cette multiplication est pris comme modulo de ladite opération arithmétique modulaire; et
    une réduction modulaire du résultat de ladite opération arithmétique modulaire est effectuée sur la base du premier modulo (n),

    **caractérisé en ce que** ladite quantité aléatoire (r) est effacée dès que ladite multiplication par le premier modulo, (n) est terminée.

2. Procédé selon la revendication 1, **caractérisé en ce que** ladite opération arithmétique modulaire (3) met en oeuvre au moins une donnée (A) d'entrée.

3. Procédé selon la revendication 2, **caractérisé en ce que** ladite donnée d'entrée (A) est une donnée introduite dans un circuit électronique mettant en oeuvre le procédé.

4. Procédé selon la revendication 2 ou 3, **caractérisé en ce que** ladite donnée secrète (s) est contenue dans un circuit électronique mettant en oeuvre le procédé.

5. Circuit de brouillage d'un calcul réalisé par un circuit intégré, **caractérisé en ce qu'**il comprend des moyens pour mettre en oeuvre le procédé selon l'une quelconque des revendications 1 à 4.

## Claims

1. A method for scrambling, in an electronic circuit, by means of a random value (r), a calculation involving at least one modular arithmetic operation (3), using at least one secret datum (s), wherein:

    a first modulo (n) is multiplied by said random value (r);
    the result (m) of this multiplication is taken as the modulo of said modular arithmetic operation; and
    a modular reduction of the result of said modular arithmetic operation is performed based on the first modulo (n);

    **characterized in that** said random value (r) is cleared as soosn as said multiplication by the first modulo (n) is achieved.

2. The method of claim 1, **characterized in that** said operation (3) involves at least one input datum (A).

3. The method of claim 2, **characterized in that** said input datum (A) is a datum input into an electronic circuit implementing the method.

4. The method of claim 2 or 3, **characterized in that** said secret datum (s) is contained in an electronic circuit implementing the method.

5. A circuit for scrambling a calculation performed by an integrated circuit, **characterized in that** it comprises means for implementing the method of any of claims 1 to 4.

## Patentansprüche

1. Ein Verfahren zum Verschlüsseln bzw. VerwürFeln in einem elektronischen Schaltkreis mittels eines Zufallswerts (r), einer Berechnung, die wenigstens eine Modulararithmetikoperation (3) involviert, und zwar unter Verwendung von wenigstens einem geheimen Datum bzw Messwert (s), wobei:

    ein erstes Modulo (n) mit dem Zufallswert (r) multipliziert wird;

das Ergebnis (m) dieser Multiplikation als das Modulo dieser Modulararithmetikoperation berechnet wird; und

eine Modularreduzierung des Ergebnisses der Modulararithmetikoperation basierend auf dem ersten Modulo (n) durchgeführt wird; **gekennzeichnet dadurch, dass** der Zufalfswert (r) gelöscht wird, und zwar sobald die Multiplikation mit dem ersten Modulo (n) ausgeführt wurde

2. Verfahren nach Anspruch 1, **dadurch gekennzeichnet, dass** die Operation (3) wenigstens ein Eingabedatum bzw. -Messwert (A) involviert.

3. Verfahren nach Anspruch 2, **dadurch gekennzeichnet, dass** das Eingabedatum (A) ein Eingabedatum für einen elektronischen Schaltkreis ist, der das Verfahren implementiert.

4. Verfahren nach Anspruch 2 oder 3, **dadurch gekennzeichnet, dass** das geheime Datum (s) in einem elektronischen Schaltkreis, der das Verfahren implementiert, enthalten ist.

5. Ein Schaltkreis zum Verschlüsseln bzw Verwürfeln einer Berechnung durchgeführt durch einen integrierten Schaltkreis, **dadurch gekennzeichnet, dass** er Mittel zum Impfementieren des Verfahrens nach einem der Ansprüche bis 4 aufweist.

Fig 1

Fig 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1006492 A

- WO 9852319 A

**Littérature non-brevet citée dans la description**

- **A.J. MENEZES ; P.C. VAN OORSCHOT ; S.A. VANSTONE.** Handbook of Applied Cryptography. CRC Press LLC, 1997, 297, 454-459484